(19) **Europäisches Patentamt / European Patent Office / Office européen des brevets**

(11) **EP 2 801 075 B1**

(12) **FASCICULE DE BREVET EUROPEEN**

(45) Date de publication et mention de la délivrance du brevet:
**19.09.2018 Bulletin 2018/38**

(21) Numéro de dépôt: **12816742.6**

(22) Date de dépôt: **19.12.2012**

(51) Int Cl.:
*G06T 3/40* ^(2006.01)

(86) Numéro de dépôt international:
**PCT/FR2012/053007**

(87) Numéro de publication internationale:
**WO 2013/102721 (11.07.2013 Gazette 2013/28)**

(54) **PROCEDE DE TRAITEMENT D'IMAGE D'UNE CAMERA EMBARQUEE SUR UN VEHICULE ET DISPOSITIF DE TRAITEMENT CORRESPONDANT**

BILDVERARBEITUNGSVERFAHREN FÜR EINE BORDKAMERA IN EINEM FAHRZEUG UND ENTSPRECHENDE VERARBEITUNGSVORRICHTUNG

IMAGE PROCESSING METHOD FOR AN ON-BOARD CAMERA INSTALLED ON A VEHICLE AND CORRESPONDING PROCESSING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2012 FR 1250096**

(43) Date de publication de la demande:
**12.11.2014 Bulletin 2014/46**

(73) Titulaire: **PSA Automobiles SA**
**78300 Poissy (FR)**

(72) Inventeur: **LARGE, Frédéric**
**F-78180 Montigny Le Bretonneux (FR)**

(74) Mandataire: **Jeannin, Laurent Jean-Pierre**
**PSA Automobiles SA**
**VPIB - LG081**
**18 rue des Fauvelles**
**92250 La Garenne Colombes (FR)**

(56) Documents cités:
EP-A1- 2 163 431    EP-A1- 2 200 312
FR-A1- 2 945 491    US-A1- 2008 129 539

- **GEHRING ET AL: "System Architecture for an Intersection Assistant Fusing Image, Map and GPS Information", INTELLIGENT VEHICLE SYMPOSIUM, 2003, 11 juin 2003 (2003-06-11), pages 144-149, XP002675976,**
- **GERN A ET AL: "Robust Lane Recognition Using Vision and DGPS Road Course Information", PROCEEDINGS IV 2001. IEEE INTELLIGENT VEHICLES SYMPOSIUM. MAY 13-17, 2001; TOKYO, JAPAN,, 13 mai 2001 (2001-05-13), page 6PP, XP009105441, ISBN: 978-4-902211-01-6**
- **WU ET AL: "Multi-camera Spatio-temporal Fusion and Biased Sequence-data Learning for Security Surveillance", PROC. OF THE ELEVENTH ACM INT. CONF. ON MULTIMEDIA, 2003, pages 528-538, XP002675977,**
- **MICHELONI ET AL: "A Network of Co-operative Cameras for Visual Surveillance", VISION, IMAGE AND SIGNAL PROCESSING, IEE PROCEEDINGS, vol. 152, no. 2, 8 avril 2005 (2005-04-08) , pages 205-212, XP002675978,**

**Description**

L'invention a trait à un système d'aide visuelle à la conduite d'un véhicule utilisant un écran destiné à afficher une vue telle qu'une vue aérienne de l'environnement dans lequel évolue le véhicule. Plus particulièrement, l'invention a trait à un procédé de traitement d'images provenant d'une caméra embarquée sur un véhicule. Plus particulièrement, l'invention a trait à un procédé de traitement d'images provenant d'une caméra embarquée sur un véhicule destiné à produire une image virtuelle correspondant à un vue aérienne, telle qu'une vue aérienne centrée sur véhicule. L'invention a également trait à un dispositif apte à mettre en oeuvre le procédé et un véhicule comprenant un tel dispositif.

Lorsqu'un conducteur effectue une manoeuvre, son champ de vision est réduit par les angles morts du véhicule qui l'empêchent de percevoir son environnement rapproché. Par exemple, il ne peut pas visualiser ce qui est directement derrière son pare-chocs arrière lorsqu'il effectue une manoeuvre en reculant. Pour aider le conducteur, il est connu de placer au moins une caméra au niveau des angles morts et d'afficher l'image sur un écran placé dans le champ de vision du conducteur. L'image affichée peut correspondre à l'image réelle saisie par la caméra, ou à une image virtuelle travaillée présentant une vue en plan ou aérienne de l'environnement du véhicule. Cette vue en plan offre une représentation plus intuitive pour situer les obstacles voisins.

Pour encore améliorer l'aide à la conduite et d'assister le conducteur lors de sa représentation de son environnement, il est possible d'étendre la zone affichée au-delà du champ de vision de la caméra. Pour cela, on utilise un historique d'images virtuelles précédemment enregistrées dont on prélève des zones jouxtant les limites du champ de vision de la caméra. La construction de cet environnement virtuel nécessite une mémoire importante pour enregistrer toutes les informations nécessaires. De plus, le traitement en temps réel de l'information génère une quantité importante de calculs qui monopolise les capacités de l'ordinateur de bord.

L'art antérieur décrit des procédés d'aide au stationnement permettant de conserver en mémoire des images de l'environnement qui ont été précédemment enregistrées.

Le document US2008/0129539 décrit un procédé de génération d'images aériennes de l'environnement d'un véhicule, c'est-à-dire des images vues à la verticale depuis un point de vue au-dessus du véhicule. Ce procédé s'appuie sur des images saisies par caméras puis transformées en vues aériennes. Les images sont dotées d'une date de saisie qui sert de critère pour leur enregistrement dans une mémoire. L'enregistrement d'une image est effectif pour des images ayant des dates suffisamment éloignées. La durée de sauvegarde dépend de leur ancienneté. L'image aérienne proposée au conducteur du véhicule s'appuie sur une image instantanée et une image enregistrée dont la partie correspondante est affichée avec une moindre visibilité. Ce procédé permet de générer un environnement véhicule en réduisant le nombre de prises de vues et la mémoire nécessaire pour les stocker. Cependant, en cas de manoeuvres prolongées, cette approche tendra à effacer des images potentiellement utiles. Une solution serait d'accroître la durée d'enregistrement, ce qui augmenterait la mémoire nécessaire.

Le document FR2945491 présente un procédé et un appareil d'aide à la conduite permettant d'afficher sur un écran une zone plus étendue que celle dans le champ de vision d'une caméra équipant le véhicule. L'image ou la vue proposée au conducteur représente une projection orthogonale fictive du sol. Elle comprend une image virtuelle I2V en projection générée à partir de l'image réelle I1R saisie par une caméra. L'image virtuelle I2V est générée en continu et sert à réaliser une image virtuelle cumulative I3V. Une image virtuelle I2V n'est intégrée à l'image virtuelle cumulative I3V que si elle est suffisamment différente de l'ancienne et dernière image virtuelle @I2V à avoir été intégrée à l'image virtuelle cumulative I3V. Cette estimation de la différence repose sur des points d'intérêts dont on calcule l'éloignement. Dès que l'éloignement dépasse un certain seuil, la zone de l'image virtuelle I2V débordant de l'ancienne image virtuelle @I2V est enregistrée. Les points d'intérêts sont à nouveau utilisés pour pouvoir superposer les images virtuelles I2V à l'image virtuelle cumulative I3V. Ensuite, est affichée au conducteur l'image virtuelle I2V qui est visible de la caméra, et en surimpression une partie de l'image virtuelle cumulative I3V pour ce qui n'est plus visible par la caméra. Ce procédé présente l'avantage de réduire la mémoire nécessaire à l'enregistrement de l'environnement. L'utilisation des points d'intérêt réduit les calculs comparatifs entre les images virtuelles. Cependant un déplacement prolongé du véhicule demande une quantité de mémoire importante pour conserver l'ensemble de l'image virtuelle cumulative I3V, à moins d'en réduire la qualité en réduisant son nombre de pixels. Un autre inconvénient apparaît lorsque le véhicule se déplace. L'image virtuelle cumulative I3V doit suivre le véhicule et être orientée en fonction de ce déplacement. Or cette orientation demande des calculs qui monopolisent les capacités de calcul de l'ordinateur de bord. De plus, ces calculs réduisent la qualité de l'image puisque les nouveaux pixels sont généralement interpolés à partir de plusieurs pixels voisins. La moindre rotation ou translation du véhicule impose une série de calculs. À partir d'un certain stade, l'image est brouillée et inutilisable pour générer une partie d'image exploitable par le conducteur. Au cours du temps, la qualité de l'image est dégradée.

L'invention a pour objectif de proposer un procédé de traitement d'images provenant d'une caméra embarquée sur un véhicule permettant de résoudre au moins un des problèmes susmentionnés. Plus particulièrement, l'invention a pour objectif de proposer un procédé de traitement d'images provenant d'une caméra embarquée sur un véhicule pour l'aide en temps réel à la conduite d'un véhicule et permettant de réduire les calculs nécessaires à la génération d'au moins une image virtuelle. L'invention a également pour objectif de proposer un procédé de traitement d'images permettant de conserver la qualité de l'image virtuelle lors du déplacement du véhicule. L'invention a également pour objectif de réduire la mémoire nécessaire à l'enregistrement de l'image virtuelle.

L'invention a pour objet un procédé de traitement d'images provenant d'une caméra embarquée sur un véhicule, comprenant les étapes itératives suivantes lors du déplacement du véhicule: (a) prise d'une image réelle par la caméra; (b) création d'une image virtuelle partielle, correspondant à une vue aérienne, à partir de l'image réelle; (c) construction d'une image virtuelle cumulative par mise en correspondance de l'image virtuelle partielle avec l'image virtuelle cumulative de l'itération précédente; (d) construction d'une image d'affichage à partir de l'image virtuelle cumulative; remarquable en ce que l'image virtuelle cumulative conserve son orientation suivant un référentiel fixe par rapport à l'environnement du véhicule sur au moins une partie du déplacement dudit véhicule; et l'image d'affichage est construite par extraction d'une portion de l'image virtuelle cumulative, ladite portion étant sélectionnée en fonction de la position du véhicule par rapport à son environnement.

L'évitement de la rotation de l'image virtuelle cumulative est avantageux car il évite des pertes de qualité de l'image, en particulier après plusieurs opérations de rotation. En effet, les rotations impliquent nécessairement des déplacements correspondant un nombre non-entier de pixels, susceptible de générer du flou au niveau de l'image. De plus, ce type d'opération est particulièrement gourmande en ressources machine.

Selon un autre mode avantageux de l'invention, lors de la première itération du procédé de traitement d'image, l'image virtuelle cumulative comprend la première image virtuelle partielle.

La position du véhicule peut provenir d'un système de positionnement absolu tel qu'un système GPS. Elle peut également être relative, comme par exemple renseignée par le degré de braquage des roues directrices et la distance parcourue lors du déplacement du véhicule.

Selon un mode avantageux de l'invention, l'extraction de la portion de l'image virtuelle cumulative se fait sans déplacement de la zone couverte par ladite image virtuelle cumulative sur un déplacement donné du véhicule, la portion étant suivant un contour correspondant préférentiellement à une vue aérienne centrée sur le véhicule. Le déplacement donné du véhicule est non nul, préférentiellement supérieur ou égal à 50 mm, plus préférentiellement 100 mm, plus préférentiellement encore 150 mm.

Selon un autre mode avantageux de l'invention, l'image virtuelle cumulative est de taille supérieure à l'image d'affichage selon au moins une direction, préférentiellement transversale à la direction moyenne de déplacement du véhicule.

Selon un encore autre mode avantageux de l'invention, la zone couverte par l'image virtuelle cumulative est déplacée, préférentiellement uniquement par translation, plus préférentiellement par translation suivant un nombre entier de pixels de l'image, lorsque le déplacement du véhicule dépasse une valeur donnée. Cette valeur donnée est non nulle, préférentiellement supérieure ou égale à 50 mm, plus préférentiellement 100 mm, plus préférentiellement encore 150 mm. La zone couverte par l'image virtuelle cumulative pourrait être déplacée en rotation et éventuellement en translation lorsque le déplacement du véhicule dépasse la valeur donnée. Cette solution présente l'avantage de minimiser les déchets d'image lors de l'extraction et, partant, de minimiser la taille de l'image cumulative à mémoriser.

Selon un encore autre mode avantageux de l'invention, l'étape (c) additionne le contour d'une portion de l'image virtuelle partielle à l'image virtuelle cumulative de l'itération précédente et l'étape (d) comprend une extraction de l'image virtuelle cumulative et une transformation de l'image virtuelle partielle. L'image d'affichage est ainsi constituée d'une première portion correspondant à une extraction de l'image cumulative et d'une deuxième portion correspondant à l'image virtuelle partielle. Cette manière de construire l'image d'affichage maximise le réalisme de l'image par l'exploitation de l'image provenant en temps réel de la caméra, et, en parallèle, minimise les ressources matérielles nécessaires en exploitant de la manière la plus simple l'image cumulée mémorisée.

Selon un encore autre mode avantageux de l'invention, l'étape (d) comprend une extraction de l'image virtuelle cumulative et une transformation de la portion de l'image virtuelle partielle pour un ensemble de positions du véhicule contenues dans un périmètre donné, la zone couverte par l'image virtuelle cumulative n'étant alors déplacée, préférentiellement par translation d'un nombre entier de pixels de l'image, que lorsque le véhicule sort dudit périmètre. L'image virtuelle partielle mise en correspondance avec l'image virtuelle cumulative à l'étape (c) n'est donc pas systématiquement intégrée et mémorisée dans l'image virtuelle cumulative lors des itérations de la méthode.

Selon un encore autre mode avantageux de l'invention, l'orientation de l'image virtuelle cumulative est constante suivant le référentiel fixe par rapport à l'environnement du véhicule sur la totalité du déplacement du véhicule.

Selon un encore autre mode avantageux de l'invention, l'étape (c) comprend une translation et/ou rotation de l'image virtuelle partielle suivant le référentiel fixe par rapport à l'environnement du véhicule, en vue de son collage à l'image virtuelle cumulative de l'itération précédente.

L'invention a également pour objet un dispositif de traitement d'images provenant d'une caméra embarquée sur un véhicule, remarquable en ce qu'il est configuré pour mettre en oeuvre le procédé selon l'invention.

Le dispositif peut comprendre :

- un dispositif de traitement de l'activation du procédé de traitement d'image,
- un module d'acquisition d'images,
- un dispositif de calcul du déplacement des images au cours du déplacement du véhicule,
- un dispositif de mise en forme de l'interface homme-machine (IHM),
- un dispositif d'affichage d'image de l'interface homme-machine.

L'invention a également pour objet un véhicule comprenant une caméra embarquée, un dispositif de traitement d'images provenant de la caméra et un afficheur d'images provenant du dispositif de traitement, remarquable en ce que le dispositif est conforme à l'invention.

L'invention permet de proposer un procédé de traitement d'images provenant d'une caméra embarquée sur un véhicule, destinée à assister le conducteur lorsqu'il effectue des manoeuvres à visibilité réduite, qui permet d'améliorer la qualité de l'image affichée et de réduire la mémoire nécessaire pour son traitement. L'invention permet de ne mémoriser qu'une zone utile de l'image virtuelle cumulative afin de réduire les besoins en mémoire pour la stocker. L'image virtuelle cumulative est recadrée sans être transformée de manière à accompagner le véhicule dans ses déplacements. Les recadrages de l'image virtuelle cumulative sont effectués par paliers de manière à réduire le nombre des opérations qui monopolisent les capacités de calcul de l'ordinateur de bord.

L'invention est également avantageuse en ce qu'elle s'adapte aux pixels et à leurs dimensions. Les recadrages de l'image virtuelle cumulative peuvent s'effectuer suivant des translations d'un nombre entier de pixels pour éviter de devoir recalculer chaque pixel à chaque déplacement, ce qui permet de conserver la netteté de la partie d'image qui sera affichée au conducteur.

D'autres caractéristiques et avantages de la présente invention seront mieux compris à l'aide de la description qui suit donnée à titre d'exemple et en référence aux dessins parmi lesquels :

- la figure 1 est une représentation schématique d'un système d'aide visuelle à la conduite selon l'invention ;
- la figure 2 est une représentation schématique des opérations de traitement de l'image d'une place de stationnement par le système d'aide visuelle selon l'invention ;
- la figure 3 est une représentation schématique des coordonnées du véhicule dans un référentiel réel ;
- la figure 4 est une représentation schématique d'une image virtuelle cumulative définie dans un référentiel virtuel ;
- la figure 5 est une représentation schématique d'une zone définie dans le référentiel réel et correspondant à l'image virtuelle cumulative de la figure 4 ;
- la figure 6 est une représentation schématique de l'image virtuelle cumulative des figures 4 et 5 et, à l'intérieur, d'un périmètre couvrant des positions du véhicule dont la vue centrée est comprise dans l'étendue de l'image virtuelle cumulative ;
- la figure 7 est une représentation schématique du processus de translation d'une image virtuelle cumulative ;
- la figure 8 est une représentation schématique du déplacement de l'image virtuelle cumulative ;
- la figure 9 est une représentation schématique d'un diagramme fonctionnel du procédé suivant un premier mode de réalisation de l'invention ;
- la figure 10 est une représentation schématique d'un diagramme fonctionnel du procédé suivant un deuxième mode de réalisation de l'invention.

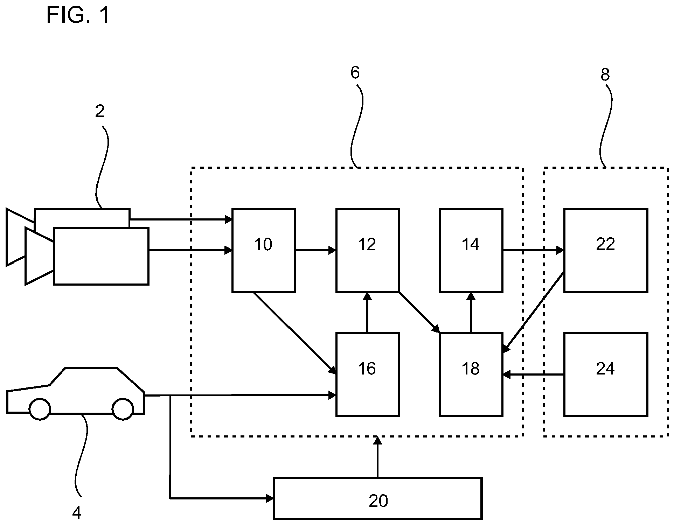

La figure 1 représente un système d'aide visuelle à la conduite permettant de manoeuvrer précisément un véhicule 4 dans un environnement étroit malgré la présence des angles morts réduisant la visibilité du conducteur. Le système d'aide visuelle est équipé d'au moins une caméra 2. Avantageusement, la caméra 2 est positionnée à l'arrière et/ou à l'avant du véhicule. Préférentiellement, le système d'aide visuelle est équipé de deux caméras 2. Préférentiellement les caméras 2 sont positionnées à l'avant et à l'arrière du véhicule. Suivant un mode avantageux de l'invention, le système d'aide visuelle est doté de quatre caméras disposées sur les quatre côtés du véhicule 4.

Suivant un mode avantageux de réalisation de l'invention, une des caméras 2 est installée à l'arrière du véhicule 4, par exemple au niveau du pavillon, à la jonction entre le volet de coffre et le toit du véhicule 4. Lorsque le véhicule présente un volet vertical s'étendant sur toute la hauteur du véhicule, la caméra 2 peut être installée de manière à ce que son champ de vision épouse la surface du volet vertical. Cette installation autorise la visualisation directe de la chaussée située à l'aplomb du pare-chocs arrière. La mémorisation d'images permet de conserver en mémoire la chaussée sur laquelle roule le véhicule, et par exemple de signaler un trou ou d'éventuels obstacles qu'il est souhaitable d'éviter.

Lorsque le véhicule a une lunette arrière inclinée et/ou un volet de coffre se prolongeant longitudinalement au-delà de la lunette, ces éléments de carrosserie occultent le champ de vision de la caméra 2. L'installation de cette dernière au niveau du pavillon ne permet pas de surveiller la chaussée située à l'aplomb du pare-chocs arrière. L'invention permettra, grâce l'historique d'images, de reproduire la zone manquante et la zone sous le véhicule.

Le système d'aide visuelle comprend un dispositif de traitement d'images 6, également appelé dispositif d'assistance 6 aux manoeuvres par historique d'images caméra. Le dispositif de traitement d'images 6 permet de mettre en oeuvre un procédé de traitement d'images.

Le dispositif de traitement d'images 6 est activé par une interface d'activation 20 qui peut déclencher le procédé de traitement d'images en fonction de paramètre(s) tels que :

- une vitesse seuil, et/ou
- l'enclenchement de la marche arrière du véhicule, et/ou
- l'enclenchement d'un bouton présent dans l'environnement du conducteur.

Le dispositif de traitement d'images 6 comprend :

- un module d'acquisition des données 10 de la/des caméra(s),
- un module de calcul du déplacement 16,
- un module de juxtaposition des images 12,
- un module de mise en forme de l'interface homme-machine (IHM) 18,
- un module d'affichage IHM 14.

Ces modules peuvent être installés dans l'ordinateur de bord du véhicule.

Le module d'acquisition des données 10 de la/des caméra(s) 2 permet de saisir puis de traiter des images réelles. Il génère une image virtuelle partielle à partir d'une image réelle. Cette génération s'effectue en fonction de la hauteur d'implantation de la caméra et de son angle de vision. Par des calculs connus en soi de l'homme du métier une image aérienne virtuelle est obtenue sur base de la position d'implantation de la caméra et des pixels qu'elle saisit.

Le module de calcul du déplacement 16 du véhicule effectue un traitement à l'aide des informations du module d'acquisition des données 10. Il compare des images virtuelles partielles successives. En complément, le module de calcul de déplacement peut recouper ses résultats avec les données d'un capteur relié à une roue ou à un organe du groupe motopropulseur.

Le module de juxtaposition des images 12 crée une image virtuelle cumulative à partir des données issues du module d'acquisition des données 10 et du module calcul du déplacement 16. L'image virtuelle cumulative comprend un ensemble d'images aériennes virtuelles. Elles sont utilisées pour étendre la zone de visibilité du conducteur au-delà de ce qui est fourni par la ou les caméras 2 en temps réel.

Le module de juxtaposition des images 12 permet également de construire une image d'affichage représentant une vue aérienne centrée sur le véhicule. L'image d'affichage comprend l'emplacement présent du véhicule et une partie de son environnement. Pour construire l'image d'affichage, le module de juxtaposition des images 12 identifie chaque pixel dont il a besoin. Un premier ensemble de pixels provient directement de l'image virtuelle partielle correspondant à l'image réelle saisie en temps réel par la caméra 2. Cette dernière ne pouvant saisir ce qui est sous le véhicule et l'environnement de l'autre côté du véhicule, le module de juxtaposition des images 12 utilise un deuxième ensemble de pixels provenant de l'image virtuelle cumulative. Ce deuxième ensemble est inscrit dans un contour qui est positionné et orienté suivant le véhicule. Pour ce faire, le contour subit une translation et/ou une rotation. À leur niveau, les pixels de l'image virtuelle cumulative sont transformés afin de pourvoir correspondre spatialement à un pixel de l'image d'affichage.

L'image d'affichage peut comprendre deux parties. Un première partie affichée au conducteur comprend une vue aérienne centrée sur le véhicule et une deuxième partie comprend une image réelle 30 saisie par une des caméras du véhicule. La caméra peut correspondre à celle qui couvre le déplacement du véhicule en temps réel.

Le module de mise en forme IHM 18 construit l'image d'affichage virtuelle. Il traite l'image d'affichage et y ajoute éventuellement une illustration du véhicule, ou juste une représentation de ses roues. Le module de mise en forme IHM 18 peut également ajouter une flèche orientée suivant l'orientation des roues directrices du véhicule. Cette flèche permet de présenter la direction de déplacement du véhicule 4.

Le module d'affichage IHM 14 transcrit les données du module de mise en forme IHM 18 afin de dessiner une image compatible avec une interface graphique. Il adapte les pixels numériques de l'image d'affichage aux pixels physiques de l'interface graphique.

Le système d'aide comprend en outre une interface homme-machine (IHM) avec :

- un afficheur d'images 22 ou écran de restitution 22 ou interface graphique 22,
- une interface de commande 24 ou écran tactile.

L'afficheur d'images 22 affiche au conducteur l'image d'affichage issue du module d'affichage IHM 14. L'afficheur d'images 22 présente un environnement comprenant une partie visible de la caméra 2 et une partie d'une vue aérienne centrée sur le véhicule qui n'est pas visible par la caméra 2.

L'interface de commande 24 ou écran tactile donne la possibilité de commander le module de mise en forme IHM 18 pour ajuster par exemple la taille de l'image souhaitée.

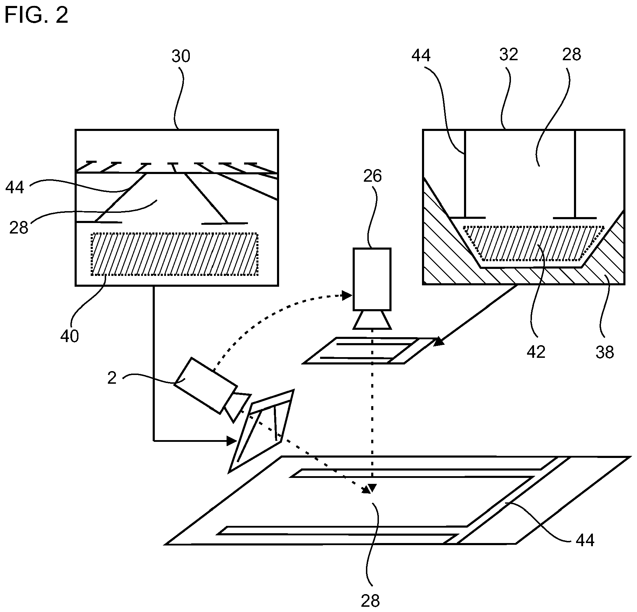

La figure 2 est une illustration de la restitution d'une portion de chaussée par une caméra 2 du système d'aide à la conduite. La portion de chaussée est une aire de stationnement sur laquelle sont matérialisées plusieurs places de stationnement 28 délimitées par des bandes de peinture 44. La chaussée est assimilée à une surface généralement plane.

La caméra 2 liée au véhicule visualise une portion de l'environnement du véhicule 4 et restitue une image réelle 30 correspondant à son angle de montage. Sur cette image réelle 30 on constate que l'alignement des bandes de peinture 44 est modifiée, elles n'apparaissent plus parallèles telles qu'elles le sont dans la réalité. Cette distorsion est liée à l'orientation de la caméra 2 qui n'est par perpendiculaire à la chaussée. Les bandes de peinture 44 sont dirigées vers un point de fuite. Les images réelles 30 sont saisies en continu ou peuvent être prise suivant une cadence donnée.

Le système d'aide visuelle permet de générer une image virtuelle partielle 32 à partir de l'image réelle 30. Cette image virtuelle partielle 32 correspond à une projection orthogonale artificielle d'une partie de l'image réelle 30 qui serait saisie par une caméra aérienne 26 virtuelle positionnée à l'aplomb de la place de stationnement 28 considérée. L'image virtuelle partielle 32 permet de recréer une vue en plan ou vue aérienne de l'environnement. Préférentiellement cette vue aérienne est une homothétie de la chaussée réelle, et ne modifie pas les angles des objets réels. Sur l'image virtuelle partielle 32 on constate que les bandes de peinture 44 redeviennent parallèles telles qu'elles le sont dans la réalité. Ce réalisme aide le conducteur à se positionner de manière non biaisée dans son environnement lors de manoeuvres.

En raison du redressement de la caméra aérienne 26, l'image virtuelle partielle 32 comprend une zone aveugle 38 qui correspond à la zone hors champ de la caméra 2. Isolement, l'image virtuelle partielle ne peut pas recréer artificiellement la zone hors champ faute de données de source.

À l'instant de l'activation du système d'aide visuelle, l'image virtuelle cumulative ne comprend que l'image virtuelle partielle 32 calculée à cet instant. Au fur et à mesure du déplacement du véhicule 4, les images virtuelles partielles 32 sont saisies, translatées puis réorientées afin de pouvoir être juxtaposées pour former une image virtuelle cumulative par juxtaposition d'images virtuelles partielles 32. L'image virtuelle cumulative forme une carte que le conducteur lit pour évaluer la distance des obstacles. L'image virtuelle cumulative continue de grandir itérativement jusqu'à atteindre un certain seuil. La juxtaposition des images virtuelles partielles 32 est effectuée en les accolant, leur repositionnement relatif est par exemple effectué selon une méthode utilisant des points d'intérêts présentant des extrémums locaux en fonction des couleurs primaires qui servent à les coder, ou de leur luminosité. La juxtaposition des images virtuelles peut également être réalisée par une méthode de stabilisation d'image. Ces méthodes sont bien connues en tant que telles de l'homme du métier.

Pour construire progressivement l'image virtuelle cumulative, le procédé de traitement d'images virtuelles incorpore à chaque phase une portion de l'image virtuelle partielle 32. Cette portion 42 est une zone d'intérêt virtuelle 42, elle correspond à une zone d'intérêt réelle 40. La zone d'intérêt réelle 40 correspond à une bande transversale jouxtant le véhicule 4. Avantageusement cette bande est positionnée à une distance qui correspond au bord de la dernière image virtuelle partielle 32 ayant été accolée.

La bande peut être un rectangle. Suite à la transformation, la forme de rectangle de la zone d'intérêt réelle 40 devient un trapèze. Inversement on peut donner une forme de trapèze à zone d'intérêt réelle 40 dans l'optique de façonner une zone d'intérêt virtuelle 42 rectangulaire. Si le véhicule 4 se déplace en ligne droite, la zone d'intérêt virtuelle 42 pourra être accolée puisque ces côtés sont réputés être parallèles à l'image virtuelle cumulative. En revanche, si le véhicule amorce un virage, la zone d'intérêt virtuelle 42 devra être pivotée et rognée.

L'invention est avantageuse en ce sens qu'elle choisit de compléter l'image virtuelle cumulative par des polygones de taille importante de manière à limiter le nombre d'opérations de superpositions qui demandent des capacités de calculs importantes lors de l'identification des points d'intérêts et de leur recoupement. La longueur moyenne des zones d'intérêt virtuelles 42 est supérieure à 0,10 m, préférentiellement supérieure à 0,30 m, encore plus préférentiellement supérieure à 1,00 m. La longueur moyenne des zones d'intérêt virtuelles 42 peut être de l'ordre de grandeur de la longueur du véhicule. La longueur moyenne des zones d'intérêt virtuelles 42 est mesurée longitudinalement au véhicule.

Sur ce point on réalise un compromis car plus la zone d'intérêt virtuelle 42 est longue, moins elle est saisie de manière précise tant les pixels éloignés représentent une surface étendue. En conséquence de quoi la longueur moyenne des zones d'intérêt virtuelles 42 est inférieure à 10,00 m, préférentiellement inférieure à 8,00 m, encore plus préférentiellement inférieure à 6,00 m. L'avantage à travailler avec une bande de pixels est que l'on maîtrise la quantité de données traitées à chaque phase d'ajout, on évite donc de saturer les capacités de calcul de l'ordinateur de bord.

Le fait de réduire la longueur moyenne des zone d'intérêt virtuelle 42 permet d'obtenir une meilleure uniformité en termes de luminosité, ce contraste et de couleur. Ainsi, l'image virtuelle cumulative gardera un aspect homogène et ne présentera pas de bandes visibles. La qualité perçue de l'image virtuelle cumulative sera ainsi améliorée.

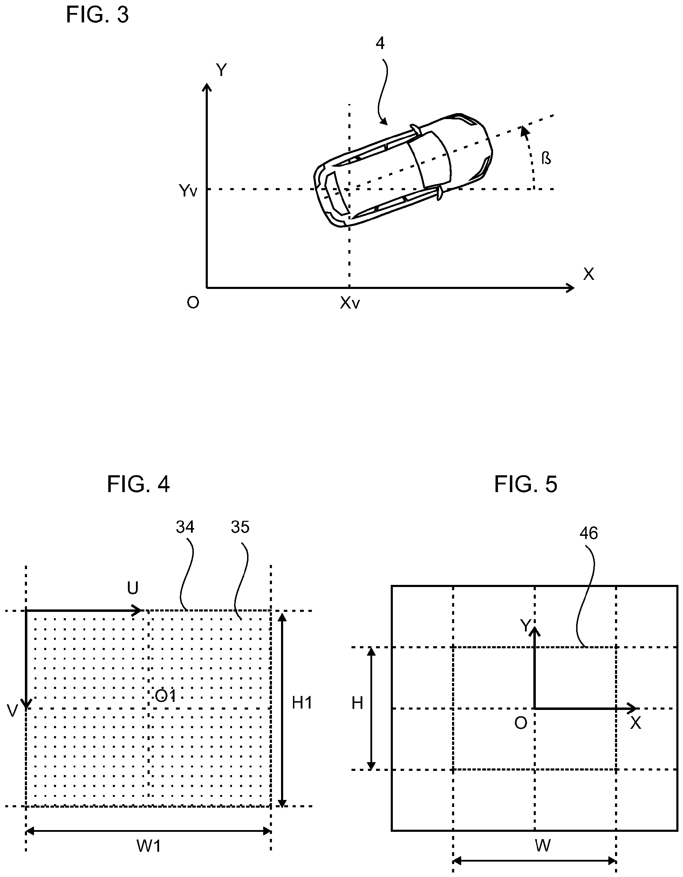

La figure 3 illustre schématiquement le positionnement spatial du véhicule 4 dans son environnement. Ce positionnement est référencé dans un référentiel réel ou repère réel, qui est créé lors de l'activation du système d'aide. Le référentiel réel est immobile par rapport à l'environnement du véhicule. Le référentiel réel comprend une origine qui correspond à un point de référence, par exemple la position du centre de l'essieu arrière du véhicule 4 à l'instant de l'activation du procédé. Le référentiel réel comprend également deux axes sécants. Ces axes sont un axe des abscisses X et un axe des ordonnées Y. L'axe des abscisses X correspond à l'axe longitudinal du véhicule à l'instant de l'activation du système d'aide à la conduite. Préférentiellement les axes sont perpendiculaires. Dans ce référentiel on définit que le sens de rotation positif est le sens trigonométrique. Ce sens de rotation permet de définir l'angle β d'orientation instantané du véhicule par rapport à l'axe des abscisses X.

Dans le référentiel réel, le véhicule 4 a pour coordonnées une abscisse $X_v$ et une ordonnée $Y_v$, son angle est $\beta_v$. À l'instant de l'activation, tous ces paramètres sont fixés à zéro. La position du véhicule 4 est recalculée en continu au cours de ses déplacements.

Le véhicule 4 possède son propre référentiel mobile qui permet une définition et un positionnement des données de l'image réelle par rapport au châssis. Ce référentiel mobile sert de base pour effectuer les calculs de génération de l'image virtuelle partielle à partir de l'image réelle 30.

La figure 4 est une représentation d'une image virtuelle cumulative 34 qui comprend des pixels 35 arrangés suivant un quadrillage de lignes et de colonnes. L'image virtuelle cumulative 34 comprend $H_1$ lignes de pixels 35 et $W_1$ colonnes de pixels 35. L'image virtuelle cumulative 34 comprend les pixels 35 utiles à la construction d'une image d'affichage pour un ensemble de position du véhicule dans l'environnement réel. La taille de l'image virtuelle cumulative 34 est limitée par la mémoire que l'on souhaite allouer à sa mémorisation. Plus les pixels 35 seront fins, plus il faudra de mémoire pour enregistrer une même image. Plus les pixels 35 seront gros plus on pourra couvrir une image étendue pour un même espace de stockage, mais moins l'image sera fine.

À l'instant de l'activation du système d'aide visuelle on définit un référentiel virtuel ou repère virtuel. Le référentiel virtuel peut être affecté à la première image virtuelle partielle ou à l'image virtuelle cumulative. Le référentiel virtuel est immobile et fixe par rapport à l'environnement du véhicule. Il est également fixe par rapport à l'image virtuelle cumulative. Par conséquent le référentiel virtuel reste fixe dans le référentiel réel, ce qui permet de simplifier les différents calculs liés aux changements de référentiels et aux superpositions images virtuelles partielles 32 pour construire l'image virtuelle cumulative 34.

Le référentiel virtuel comprend deux axes sécants. On retient un axe des abscisses U et un axe des ordonnées V. L'axe des abscisses U et l'axe des ordonnées V sont perpendiculaires. Selon un mode avantageux de l'invention, l'axe des abscisses U est parallèle à l'axe des abscisses X et orienté dans le même sens. L'axe des ordonnées V est parallèle à l'axe des ordonnées Y. Ces particularités permettent encore de simplifier les différents calculs liés aux superpositions d'images virtuelles partielles 32 pour construire l'image virtuelle cumulative 34.

Suivant une alternative de l'invention, le référentiel virtuel est mobile par rapport au référentiel réel. Ce référentiel virtuel suit les déplacements du véhicule. Cependant, au cours des déplacements du véhicule l'axe des abscisses U et l'axe des ordonnées V gardent leur orientation quel que soit l'angle du véhicule dans le référentiel réel. Lorsque le référentiel virtuel se déplace, il n'effectue que des translations d'un nombre entier de pixels.

Dans le référentiel virtuel le véhicule 4 a pour coordonnées une abscisse $U_v$ et une ordonnées $V_v$. À l'instant d'activation du procédé de traitement d'images, tous ces paramètres sont initialisés. La valeur d'initialisation de l'abscisse devient $U=W_1/2$, et la valeur d'initialisation de l'ordonnée devient $V=H_1/2$. Cette particularité a pour conséquence d'attribuer des valeurs positives aux pixels de l'image virtuelle cumulative afin de simplifier leur traitement dans certaines configurations. La position du véhicule est recalculée en continu dans le référentiel virtuel.

Le référentiel mobile lié au véhicule, le référentiel réel et le référentiel virtuel ont des origines, des orientations et des échelles qui peuvent différer. Des opérations de changement de repère ou changement de référentiel permettent de passer d'un référentiel à l'autre. Elles prennent en compte les différentes origines et les changements de position du véhicule. Les formules mathématiques de changement de référentiel correspondantes sont bien connues de l'homme du métier et ne seront pas détaillés d'avantage. Les opérations de changement de référentiel sont utiles pour déterminer un contour virtuel englobant les pixels extraits de l'image virtuelle cumulative nécessaires à la construction de l'image d'affichage. En effet, l'image d'affichage et l'image virtuelle partielle sont exprimées selon le référentiel véhicule, l'image virtuelle cumulative dépend du référentiel virtuel. Le système d'aide visuelle s'appuie dans un premier temps sur les pixels de l'image virtuelle partielle pour déduire les pixels manquant à la génération de l'image d'affichage. Ces pixels manquants représentent une forme manquante exprimée dans le référentiel véhicule. Par un changement de référentiel passant du référentiel mobile au référentiel virtuel, les pixels de l'image virtuelle cumulative qui correspondent à la forme manquante sont identifiés. Ces pixels sont délimités par un contour virtuel exprimé dans le référentiel virtuel. Ensuite, un changement de référentiel inverse à celui précédemment utilisé permet de passer du référentiel virtuel au référentiel mobile. Il permet de convertir les pixels du contour virtuel dans le référentiel mobile. Les changements de référentiels liant le référentiel mobile au référentiel virtuel utilisent des changements de référentiels intermédiaires qui sont liés au référentiel réel. En effet, le référentiel réel permet de rattacher le référentiel mobile au référentiel virtuel en fonction des déplacements du véhicule.

Une particularité de l'invention est qu'au cours du déplacement du véhicule 4, le référentiel virtuel reste fixe et les pixels de l'image virtuelle cumulative restent invariants. Le véhicule se déplace dans le référentiel virtuel et non l'inverse. On aura bien compris que cette particularité permet d'économiser des calculs de mise à jour l'image virtuelle cumulative 34 quelle que soit la position du véhicule. Ces calculs demanderaient des traitements lourds pour déterminer chaque nouveau pixel à chaque déplacement. Un deuxième avantage de l'invention est de préserver la qualité et la finesse de l'image virtuelle cumulative 34. En effet, le fait d'économiser des calculs de mise à jour évite d'avoir besoin de calculer un nouveau pixel à partir de plusieurs anciens pixels. Un nouveau pixel recréé comprendrait une moyenne pondérée de pixels de base si un nouveau pixel ne correspond pas précisément à un ancien pixel. Ce cas de figure étant le plus courant, les pixels subiraient constamment des transformations qui dégradent l'aspect initial des pixels d'origine et réduisent leur précision. À force d'effectuer des images interpolées, l'image virtuelle cumulative 34 deviendrait floue tant ses pixels seraient approximés.

L'image virtuelle cumulative 34 est représentée sous la forme d'un rectangle. Elle peut alternativement prendre la forme d'un rond ou d'un polygone délimités par des pixels.

La figure 5 est une représentation d'une zone couverte 46 correspondant à l'image virtuelle cumulative 34. Ces deux entités sont liées en termes de position. La zone couverte 46 est définie dans le référentiel réel. Elle correspond à une surface réelle. La zone couverte 46 a une longueur de W mètres et une largeur de H mètres définis par rapport au référentiel réel. Préférentiellement, la longueur W et la largeur H sont supérieurs aux dimensions respectives du véhicule.

On précise qu'il existe une corrélation entre l'image virtuelle cumulative 34 et la zone couverte 46 suivant une transformation $T_1$ :

$$H = H_1 * T_1$$

$$W = W_1 * T_1$$

$T_1$ correspond à échelle de l'image virtuelle cumulative 34.

Les dimensions W et H permettent de déterminer la zone que l'on souhaite couvrir. Elles sont liées aux données $H_1$ et $W_1$, et à par la mémoire allouée pour l'enregistrement des pixels. Le coefficient $T_1$ permet donc de faire un compromis entre la taille de la mémoire allouée et la finesse de représentation de l'image virtuelle cumulative 34. À titre d'exemple un coefficient $T_1$=0.02 est une valeur adaptée pour une application d'aide aux manoeuvres montrant, à vitesse lente, l'environnement proche à moins de 2,00 m autour du véhicule 4. Ce coefficient est également en accord avec la taille courante des pixels 35 employés dans les systèmes d'aides à la conduite.

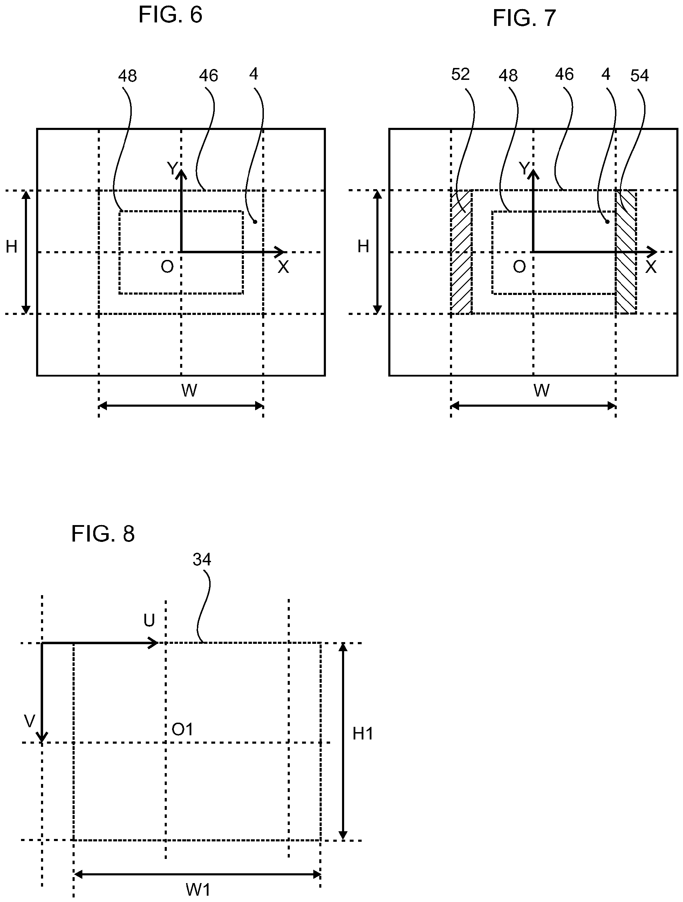

La figure 6 est une représentation d'une zone couverte 46 dans laquelle on représente un périmètre 48. Concrètement, ce périmètre 48 correspond à la surface réelle dans laquelle le système d'aide visuelle est en mesure d'apporter une représentation de la chaussée depuis un bord du véhicule 4 jusqu'à une limite du champ d'une caméra 2. Cette extraction est fonction de l'emplacement présent du véhicule et des images virtuelles partielles qui ont été accolées dans l'image virtuelle cumulative.

Si le véhicule 4 est en dehors du périmètre 48, il n'est plus couvert par l'image virtuelle cumulative 34 et une aide à la conduite convenable selon l'invention ne peut être fournie au conducteur. L'image virtuelle cumulative 34 doit être adaptée.

La figure 7 est une représentation d'une translation de la zone couverte 46 visant à intégrer le véhicule 4 dans le périmètre 48. Selon la figure 6, une translation du périmètre 48 suivant l'axe des abscisses X permet au véhicule de réintégrer le périmètre 48. On effectue par conséquent une translation suivant cet axe. La zone couverte et l'image virtuelle cumulative étant liées, on déplace également l'image virtuelle cumulative suivant l'axe des abscisses U auquel elle est liée.

La distance de translation de la zone couverte 46 est préférentiellement supérieure à la distance séparant le véhicule 4 du périmètre 48. La distance de translation correspond à l'écart entre un bord de la zone couverte 46 et un bord du périmètre 48 tels que représentés sur la figure 6. La distance de translation de la bande est à minima la distance qui correspond à la distance virtuelle entre le coin le de l'image d'affichage le plus éloigné du centre de l'essieu arrière du véhicule. La distance de translation permet de recouvrir une bande avant 54.

On souligne que la distance de translation correspond à la largeur de la bande avant 54.

Suivant une alternative de l'invention, la distance de translation de la zone couverte 46 peut être une valeur fixe ou être choisie en fonction de la vitesse du véhicule 4. Par exemple la distance de déplacement de la zone couverte 46 sera d'autant plus grande que la vitesse du véhicule est élevée. Puisque l'invention a pour but de réduire la fréquence des calculs liés aux translations, le choix d'une distance de translation étendue en cas de vitesse élevée est avantageuse. Ceci s'explique par le fait qu'à vitesse élevée le véhicule parcourra plus rapidement la bande avant 54. Sa vitesse est également un indice comme quoi il traversera en entier la bande avant 54.

Suivant un mode avantageux de l'invention, l'image virtuelle cumulative comprend un nombre entier de colonnes verticales dont la largeur est égale à la largeur de la bande avant 54. Cet aspect de l'invention permet de découper l'image virtuelle cumulative en un nombre entier de colonnes qui facilitent la gestion de l'image virtuelle cumulative puisque à chaque déplacement le procédé de traitement d'image n'a besoin que de gérer des colonnes prédéfinies.

Suivant un autre mode avantageux de l'invention, l'image virtuelle cumulative comprend un nombre entier de colonnes horizontales dont l'épaisseur correspond à l'espace entre un bord de la zone couverte 46 et un bord du périmètre 48.

Les colonnes horizontales et les colonnes verticales peuvent avoir des épaisseurs égales.

La figure 8 est une représentation du recadrage de l'image virtuelle cumulative 34 permettant d'englober le véhicule selon sa nouvelle position.

Un avantage de l'invention est que lors du processus de recadrage, l'image virtuelle cumulative 34 est translatée d'un nombre entiers de pixels. Quand bien même le besoin réel de déplacement de l'image virtuelle cumulative s'arrête entre deux pixels, l'ajout de ce pixel dans l'image virtuelle cumulative est forcé. On aura bien compris que l'avantage à atteindre un déplacement d'un nombre entier de pixels permet d'éviter d'interpoler de nouveaux pixels qui seraient à cheval sur deux anciens pixels. Un nouveau pixel qui devrait être approximé entraînerait les dégradations d'images précédemment évoquées.

Pour pouvoir translater l'image virtuelle cumulative 34 il faut lui ajouter une partie de zone d'intérêt virtuelle ou plusieurs zones d'intérêts virtuelles 42 qui permet(tent) de couvrir la zone couverte du véhicule 4. La zone d'intérêt virtuelle 42 doit au préalable être exprimée en pixels organisés suivant le quadrillage du référentiel virtuel, elle doit également être tournée et translatée de manière adéquate pour épouser le ou les bords de l'image virtuelle cumulative 34.

Le déplacement du périmètre 48 permet de couvrir une surface suffisante avec l'image virtuelle cumulative 34 tout en maîtrisant la taille de la mémoire pour l'enregistrer. L'image virtuelle cumulative 34 respecte une taille maximale en termes de pixels. La taille maximale peut être limitée par un pourtour virtuel tel un rectangle, ou tout type de polygone. Lors du déplacement du véhicule le pourtour virtuel se déplace également tout en conservant une forme fixe.

Lors du déplacement du périmètre 48, la zone couverte 46 recouvre une nouvelle bande avant 54, et quitte une bande arrière 52 qui s'inscrirait dans le périmètre de l'ancienne position du véhicule.

Suivant une alternative de l'invention le système d'aide visuelle peut prévoir de déplacer le pourtour virtuel et donc le périmètre 48 dès que le véhicule dépasse une vitesse seuil S2.

Suivant une alternative de l'invention, le système d'aide visuelle peut prévoir de déplacer le pourtour virtuel, et donc le périmètre 48 lorsque le véhicule 4 a une direction de déplacement dépassant un angle seuil S3 mesuré par rapport à l'axe des abscisses X.

Suivant une alternative de l'invention, le système d'aide visuelle peut prévoir de déplacer le pourtour virtuel, et donc le périmètre 48, lorsque l'angle $\beta_V$ dépasse une valeur seuil S4.

Ces alternatives sont particulièrement judicieuses dans le cas d'un système d'aide visuelle n'utilisant qu'une seule caméra utilisée pour l'avant et l'arrière du véhicule. Ces alternatives permettent d'anticiper d'avantage sur les besoins de recadrage de l'image virtuelle cumulative 34.

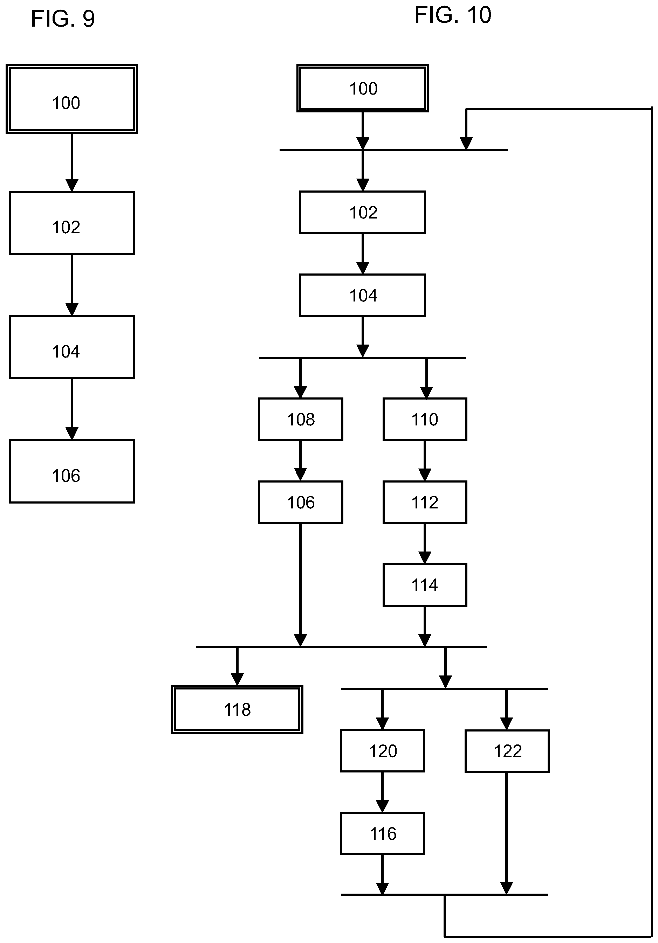

La figure 9 est une représentation schématique d'un diagramme fonctionnel qui présente les étapes du procédé de traitement d'images selon un premier mode de fonctionnement de l'invention.

La première étape du diagramme comprend une étape d'initialisation 100 qui est réalisée dès que le procédé est activé. À cette étape la mémoire qui est allouée pour le stockage de l'image virtuelle cumulative 34 est effacée. Lors de cette étape, on crée également le référentiel virtuel et le référentiel réel. On définit leurs origines et oriente leurs axes en fonction de l'orientation du véhicule en cet instant d'activation.

La deuxième étape est une étape de prise 102 d'une image réelle 30 à l'aide de la caméra 2 du véhicule 4. Cette image est une image instantanée.

La troisième étape est une étape de création 104 de l'image virtuelle partielle 32 à partir de l'image réelle 30. L'étape de création 104 permet de plaquer une partie de la vue réelle 30 sur une vue verticale virtuelle représentant la chaussée et l'environnement du véhicule.

La quatrième étape est une étape de sauvegarde 106 de l'image virtuelle partielle 32 qui prend le statu d'image virtuelle cumulative 34. On considère que la taille de l'image virtuelle partielle 32 est suffisante afin d'illustrer clairement l'environnement du véhicule pour que le conducteur effectue des manoeuvres précisés avec une visibilité adéquate. Cette configuration peut se rencontrer si le véhicule circule dans un espace dégagé.

Dans ce cas, le procédé permet de créer une image virtuelle cumulative 34 qui sera utilisée pour guider le conducteur. Ses pixels étant exprimés dans un référentiel immobile, ils ne seront plus recalculés en cas de déplacement du véhicule. Cet aspect de l'invention limite le nombre d'opérations que les pixels subissent. Un autre avantage est que l'image virtuelle cumulative 34 est saisie en une étape. Cette particularité permet d'économiser des calculs liés au recadrage et au repositionnement de l'image virtuelle partielle 32.

Cependant cette méthode impose d'enregistrer et de traiter une surface importante en une seule phase, dont tous les résultats ne seront pas forcément utilisées. De plus, en cas de zone présentant des recoins, la saisie de l'image en une étape est peu fiable. Un autre mode de fonctionnement est prévu pour s'adapter à ces particularités.

La figure 10 est une représentation d'un diagramme fonctionnel du procédé de traitement d'images suivant un deuxième mode de fonctionnement de l'invention.

Ce diagramme reprend les trois premières étapes du premier mode de fonctionnement du procédé. À la suite de la troisième étape, le diagramme prévoit de choisir entre deux alternatives.

Le diagramme vérifie à l'étape 108 si l'image virtuelle partielle 32 est la première à être générée. Si tel est le cas, elle devient l'image virtuelle cumulative 34 conformément à la quatrième étape du premier mode de fonctionnement du procédé. Elle est alors enregistrée dans la mémoire du système d'aide visuelle.

Dans le cas contraire, il existe déjà une image virtuelle cumulative 34. Alors le procédé effectue une étape de sélection 110 qui consiste à choisir parmi les pixels de l'image virtuelle partielle 32, ceux qui vont être ajoutés à l'image virtuelle cumulative 34 pour la compléter. Généralement il s'agit de la zone d'intérêt virtuelle 42 (figure 2) qui peut être accolée directement ou subir un rognage si l'on souhaite s'adapter à un virage.

L'étape suivante est une étape d'adaptation 112 qui a pour but de faire concorder l'image virtuelle partielle 32 au pourtour virtuel de l'image virtuelle cumulative 34. Puisque le véhicule 4 peut avoir tourné par rapport à son orientation lors de l'activation, l'image virtuelle partielle 32 doit dans un premier temps être pivotée. Ensuite, le véhicule s'étant translaté par rapport à sa dernière position ayant servi pour construire l'image virtuelle cumulative 34, l'image virtuelle partielle 32 doit être translatée. De la sorte cette dernière peut épouser le pourtour virtuel.

L'image virtuelle partielle 32 doit également être compatible avec le quadrillage de l'image virtuelle cumulative 34. Pour cela ses pixels sont recalculés pour coïncider avec le quadrillage de l'image virtuelle cumulative 34.

On aura bien compris que par ce biais on parvient à créer une image virtuelle cumulative 34 toujours disponible en seulement deux calculs sur les pixels :

- un premier pour passer de l'image réelle à l'image virtuelle partielle 32,
- un deuxième pour passer de l'image virtuelle partielle 32 à l'image virtuelle cumulative 34.

L'étape suivante est une étape de cumul 114 ou étape de construction 114 au cours de laquelle les pixels de l'image virtuelle partielle 32 sélectionnés sont ajoutés à l'image virtuelle cumulative 34. En parallèle, une portion de l'image virtuelle cumulative 34 peut être effacée si, au moment de l'étape d'adaptation 112, l'image virtuelle cumulative avait déjà atteint la taille du pourtour virtuel qu'elle doit respecter. La nouvelle image virtuelle cumulative 34 est enregistrée suivant son nouvel aspect.

À présent le procédé arrive à une transition qui est également atteinte par étape de sauvegarde 106. Il peut se poursuivre suivant au moins deux voies.

Une première voie est une étape de fin 118, qui est atteinte si un critère prédéfini est vérifié. Il peut s'agir d'une vitesse du véhicule, d'un rapport de vitesse enclenché par le conducteur, un appui sur une commande par le conducteur, ou encore l'extinction du véhicule. Alternativement l'étape de fin peut renvoyer directement à l'étape d'initialisation 100.

Une deuxième voie conduit à une étape 122 de contrôle de la position du véhicule. Si le véhicule 4 est à l'intérieur du périmètre 48, le procédé de traitement d'image retourne en étape de prise 102 d'une image réelle 30 en vue de son traitement et de son ajout à l'image virtuelle cumulative 34. Ce processus ajout est effectué en continu.

Dans la deuxième voie, si le véhicule est sorti du périmètre 48, on effectue une étape de glissement 120 de la zone couverte 46 dans le référentiel réel. Suite à l'étape de glissement 120 est effectuée une étape de recadrage 116 qui correspond un besoin de déplacer le pourtour virtuel de l'image virtuelle cumulative 34 afin de l'adapter à des besoins du véhicule en fonction de l'évolution de sa position. Le recadrage de l'image virtuelle cumulative permet d'autoriser l'enregistrement de pixels inscrits à l'intérieur du nouvel espace qu'elle occupe. Les pixels hors de l'image virtuelle cumulative ne sont pas enregistrés, ce qui réduit les données enregistrées. L'opération d'enregistrement de nouveaux pixels provenant d'une image virtuelle partielle s'effectue en continu. Des pixels de deux images virtuelles partielles peuvent se chevaucher. Si l'image virtuelle cumulative n'était pas recadrée, de nouveaux pixels saisis par le procédé ne pourraient être enregistrés lorsque le véhicule est au bord de la zone couverte 46.

Alternativement l'étape de glissement 120 et l'étape de recadrage 116 peuvent être déclenchées lors des situations suivantes :

- lorsque la vitesse du véhicule atteint un seuil, ou

- lorsque l'orientation du véhicule dépasse un angle par rapport à l'axe des abscisses U, ou

- lorsque la direction de déplacement du véhicule dépasse un angle par rapport à l'axe des abscisses U.

Une fois l'étape de recadrage 116 effectuée, le procédé de traitement d'images fonctionne en boucle. Il entame à nouveau l'étape de prise 102 qui exploite l'image réelle 30 instantanée pour compléter l'image virtuelle cumulative 34. Le procédé continue de manière itérative jusqu'à ce qu'un évènement interrompe le procédé selon l'étape de fin 118. Le fait d'effectuer à nouveau une étape de prise 102 d'une image réelle peut être conditionné par un avancement minimal du véhicule. Cet avancement minimal peut correspondre à un nombre de pixel, ou à la longueur de la zone d'intérêt virtuelle 42. Cette distance devra permettre une jonction entre la zone d'intérêt virtuelle 42 qui est ajoutée à l'image virtuelle cumulative de manière à ne pas laisser subsister de zone non renseignée.

Ce deuxième mode de fonctionnement du procédé permet de traiter une quantité de pixels optimisée. L'ajout d'une zone d'intérêt virtuelle 42 est effectué dans des proportions qui optimisent à la fois l'utilité des données et le nombre d'opérations. On ajoute une zone d'intérêt virtuelle 42 de taille suffisante pour ne pas avoir besoin de recommencer l'opération d'ajout fréquemment et ne pas surcharger trop souvent la capacité de calcul du système d'aide visuelle. L'ajout de la zone d'intérêt virtuelle 42 respecte une profondeur de champ qui a une forte probabilité de devenir utile au système d'aide visuelle.

**Revendications**

1. Procédé de traitement d'images provenant d'une caméra (2) embarquée sur un véhicule (4), comprenant les étapes itératives suivantes lors du déplacement du véhicule (4) :

   (a) prise (102) d'une image réelle (30) par la caméra (2) ;
   (b) création (104) d'une image virtuelle partielle (32), correspondant à une vue aérienne, à partir de l'image réelle (30) ;
   (c) construction (106, 114) d'une image virtuelle cumulative (34) par mise en correspondance de l'image virtuelle partielle (32) avec l'image virtuelle cumulative (34) de l'itération précédente ;
   (d) construction d'une image d'affichage à partir de l'image virtuelle cumulative (34) ;

   l'image virtuelle cumulative (34) conservant son orientation suivant un référentiel fixe par rapport à l'environnement du véhicule (4) sur au moins une partie du déplacement dudit véhicule (4) ; et l'image d'affichage étant construite par extraction d'une portion de l'image virtuelle cumulative (34), ladite portion étant sélectionnée en fonction de la position du véhicule (4) par rapport à son environnement, **caractérisé en ce que** la zone couverte par l'image virtuelle cumulative (34) est déplacée, préférentiellement uniquement par translation, plus préférentiellement encore par translation suivant un nombre entier de pixels, lorsque le déplacement du véhicule dépasse une valeur donnée.

2. Procédé selon la revendication 1, **caractérisé en ce que** l'extraction de la portion de l'image virtuelle cumulative (34) se fait sans déplacement de la zone couverte par ladite image virtuelle cumulative (34) sur un déplacement donné du véhicule, la portion étant suivant un contour correspondant préférentiellement à une vue aérienne centrée sur le véhicule.

3. Procédé selon l'une des revendications 1 à 2, **caractérisé en ce que** l'image virtuelle cumulative (34) est de taille supérieure à l'image d'affichage selon au moins une direction, préférentiellement transversale à la direction moyenne de déplacement du véhicule.

4. Procédé selon l'une des revendications 1 à 3, **caractérisé en ce que** l'étape (c) additionne le contour d'une portion (42) de l'image virtuelle partielle (32) à l'image virtuelle cumulative (34) de l'itération précédente et l'étape (d) comprend une extraction d'une portion de l'image virtuelle cumulative (34) et une transformation de la portion (42) de l'image virtuelle partielle (32).

5. Procédé selon l'une des revendications 1 à 4, **caractérisé en ce que** l'étape (d) comprend une extraction d'une portion de l'image virtuelle cumulative (34) et une transformation d'une portion (42) de l'image virtuelle partielle (32) pour un ensemble de positions du véhicule (4) contenues dans un périmètre donné (48), la zone couverte par l'image virtuelle cumulative (34) n'étant alors déplacée, préférentiellement par translation, plus préférentiellement encore par translation d'un nombre entier de pixel, que lorsque le véhicule sort dudit périmètre (48).

6. Procédé selon l'une des revendications 1 à 5, **caractérisé en ce que** l'orientation de l'image virtuelle cumulative (34) est constante suivant le référentiel fixe par rapport à l'environnement du véhicule (4) sur la totalité du déplacement du véhicule.

7. Procédé selon l'une des revendications 1 à 6, **caractérisé en ce que** l'étape (c) comprend une translation et/ou rotation de l'image virtuelle partielle (32) suivant le référentiel fixe par rapport à l'environnement du véhicule (4), en vue de son collage à l'image virtuelle cumulative (34) de l'itération précédente.

8. Dispositif de traitement d'images (6) provenant d'une caméra (2) embarquée sur un véhicule (4), **caractérisé en ce qu'**il est configuré pour mettre en oeuvre le procédé selon l'une des revendications 1 à 7.

9. Véhicule (4) comprenant une caméra (2) embarquée, un dispositif de traitement d'images (6) provenant de la caméra (2) et un afficheur d'images (22) provenant du dispositif de traitement (6), **caractérisé en ce que** le dispositif est conforme à la revendication 8.

**Patentansprüche**

1. Verfahren zum Verarbeiten von Bildern, die von einer Bordkamera (2) eines Fahrzeugs (4) kommen, das die folgenden iterativen Schritte bei der Bewegung des Fahrzeugs (4) umfasst:

   (a) Aufnehmen (102) eines realen Bilds (30) durch die Kamera (2);
   (b) Anlegen (104) eines virtuellen Teilbilds (32), das einer Luftaufnahme entspricht, ausgehend von dem realen Bild (30);
   (c) Aufbauen (106, 114) eines kumulierenden virtuellen Bilds (34) durch Herstellen der Entsprechung des virtuellen Teilbilds (32) mit dem kumulativen virtuellen Bild (34) der vorhergehenden Iteration;
   (d) Aufbauen eines Anzeigebilds ausgehend von dem kumulativen virtuellen Bild (34);

wobei das kumulative virtuelle Bild (34) seine Ausrichtung entlang eines Bezugssystems, das in Bezug auf die Umgebung des Fahrzeugs (4) fix ist, auf mindestens einem Teil der Bewegung des Fahrzeugs (4) wahrt, und

wobei das Anzeigebild durch Extraktion eines Abschnitts des kumulativen virtuellen Bilds (34) aufgebaut wird, wobei der Abschnitt in Abhängigkeit von der Position des Fahrzeugs (4) in Bezug auf seine Umgebung ausgewählt wird, **dadurch gekennzeichnet, dass** die Deckungszone durch das kumulative virtuelle Bild (34) bevorzugt nur durch Verschiebung, noch bevorzugter durch Verschiebung entlang einer ganzen Zahl von Pixeln verschoben wird, wenn die Bewegung des Fahrzeugs einen gegebenen Wert überschreitet.

2. Verfahren nach Anspruch 1, **dadurch gekennzeichnet, dass** die Extraktion des Abschnitts des kumulativen virtuellen Bilds (34) ohne Bewegung der Zone, die von dem kumulativen virtuellen Bild (34) auf einer gegebenen Bewegung des Fahrzeugs gedeckt wird, erfolgt, wobei der Abschnitt gemäß einer Kontur ist, die bevorzugt einer auf das Fahrzeug zentrierten Luftaufnahme entspricht.

3. Verfahren nach einem der Ansprüche 1 bis 2, **dadurch gekennzeichnet, dass** das kumulative virtuelle Bild (34) gemäß mindestens einer Richtung eine Größe hat, die größer ist als das Anzeigebild, bevorzugt quer zu der mittleren Bewegungsrichtung des Fahrzeugs.

4. Verfahren nach einem der Ansprüche 1 bis 3, **dadurch gekennzeichnet, dass** der Schritt (c) die Kontur eines Abschnitts (42) des virtuellen Teilbilds (32) zu dem kumulativen virtuellen Bild (34) der vorhergehenden Iteration hinzufügt, und der Schritt (d) eine Extraktion eines Abschnitts des kumulativen virtuellen Bilds (34) und eine Transformation des Abschnitts (42) des virtuellen Teilbilds (32) umfasst.

5. Verfahren nach einem der Ansprüche 1 bis 4, **dadurch gekennzeichnet, dass** der Schritt (d) eine Extraktion eines Abschnitts des kumulativen virtuellen Bilds (34) und eine Transformation eines Abschnitts (42) des virtuellen Teilbilds (32) für eine Einheit von Positionen des Fahrzeugs (4) umfasst, die in einem gegebenen Umkreis (48) enthalten ist, wobei die Zone, die von dem kumulativen virtuellen Bild (34) gedeckt wird, dabei nur bevorzugt durch Verschiebung, noch bevorzugter durch Verschiebung um eine ganze Zahl von Pixeln verlagert wird, wenn das Fahrzeug aus dem Umkreis (84) austritt.

6. Verfahren nach einem der Ansprüche 1 bis 5, **dadurch gekennzeichnet, dass** die Ausrichtung des kumulativen virtuellen Bilds (34) gemäß dem Bezugssystem, das in Bezug auf die Umgebung des Fahrzeugs (4) fix ist, auf der gesamten Bewegung des Fahrzeugs konstant ist.

7. Verfahren nach einem der Ansprüche 1 bis 6, **dadurch gekennzeichnet, dass** der Schritt (c) eine Verschiebung und/oder Drehung des virtuellen Teilbilds (32) gemäß dem Bezugssystem, das in Bezug auf die Umgebung des Fahrzeugs (4) fix ist, zu seinem Kleben an das kumulative virtuelle Bild (34) der vorhergehenden Iteration umfasst.

8. Vorrichtung (6) zur Verarbeitung eines Bilds, das von einer Bordkamera (2) eines Fahrzeugs (4) kommt, **dadurch gekennzeichnet, dass** sie konfiguriert ist, um das Verfahren nach einem der Ansprüche 1 bis 7 umzusetzen.

9. Fahrzeug (4), das eine Bordkamera (2), eine Vorrichtung zur Verarbeitung von Bildern (6), die von der Kamera (2) kommen, und einen Anzeiger (22) von Bildern, die von der Verarbeitungsvorrichtung (6) kommen, umfasst, **dadurch gekennzeichnet, dass** die Vorrichtung Anspruch 8 entspricht.

## Claims

1. A method for the processing of images originating from an on-board camera (2) installed on a vehicle (4), including the following iterative steps during the movement of the vehicle (4):

   (a) capture (102) of a real image (30) by the camera (2) ;
   (b) creation (104) of a partial virtual image (32), corresponding to an aerial view, from the real image (30);
   (c) construction (106, 114) of a cumulative virtual image (34) by matching of the partial virtual image (32) with the cumulative virtual image (34) of the preceding iteration;
   (d) construction of a display image from the cumulative virtual image (34);

   the cumulative virtual image (34) retaining its orientation according to a frame of reference that is fixed with respect to the surroundings of the vehicle (4) over at least a portion of the movement of the said vehicle (4); and
   the display image being constructed by extraction of a portion of the cumulative virtual image (34), said portion being selected as a function of the position of the vehicle (4) with respect to its surroundings, **characterized in that** the zone covered by the cumulative virtual image (34) is displaced, preferably solely by translation, still more preferably by translation according to a whole number of pixels, when the movement of the vehicle exceeds a given value.

2. The method according to Claim 1, **characterized in that** the extraction of the portion of the cumulative virtual image (34) is carried out without movement of the zone covered by said cumulative virtual image (34) over a given movement of the vehicle, the portion being according to a contour corresponding preferably to an aerial view centred on the vehicle.

3. The method according to one of Claims 1 to 2, **characterized in that** the cumulative virtual image (34) is of greater size than the display image along at least one direction, preferably transverse to the mean movement direction of the vehicle.

4. The method according to one of Claims 1 to 3, **characterized in that** the step (c) adds the contour of a portion (42) of the partial virtual image (32) to the cumulative virtual image (34) of the preceding iteration, and the step (d) includes an extraction of a portion of the cumulative virtual image (34) and a transformation of the portion (42) of the partial virtual image (32).

5. The method according to one of Claims 1 to 4, **characterized in that** the step (d) includes an extraction of a portion of the cumulative virtual image (34) and a transformation of a portion (42) of the partial virtual image (32) for a set of positions of the vehicle (4) contained in a given perimeter (48), the zone covered by the cumulative virtual image (34) then only being moved, preferably by translation, still more preferably by translation of a whole number of pixels, when the vehicle exits said perimeter (48).

6. The method according to one of Claims 1 to 5, **characterized in that** the orientation of the cumulative virtual image (34) is constant according to the frame of reference fixed with respect to the surroundings of the vehicle (4) over the whole of the movement of the vehicle.

7. The method according to one of Claims 1 to 6, **characterized in that** the step (c) includes a translation and/or rotation of the partial virtual image (32) according to the frame of reference fixed with respect to the surroundings of the vehicle (4), with a view to its adhering to the cumulative virtual image (34) of the preceding iteration.

8. A device for the processing of images (6) originating from an on-board camera (2) installed on a vehicle (4), **characterized in that** it is configured for implementing the method according to one of Claims 1 to 7.

9. A vehicle (4) including an on-board camera (2), a device for the processing of images (6) originating from the camera (2) and a display of images (22) originating from the processing device (6), **characterized in that** the device is in accordance with Claim 8.

FIG. 1

FIG. 2

FIG. 3

FIG. 4

FIG. 5

FIG. 6

48    46    4

Y

H

O    X

W

FIG. 7

52    48    46    4    54

Y

H

O    X

W

FIG. 8

34

U

V

O1

H1

W1

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080129539 A
- FR 2945491